# EUROPEAN PATENT APPLICATION

(11) **EP 2 236 237 A1**
(43) Date of publication of application: **06.10.2010**
(21) Application number: 09004850.5
(22) Date of filing: 01.04.2009
(51) Int. Cl.: B23K 20/08, F01D 5/00

(54) **An arrangement for explosion welding a hot gas component of a turbine and a method thereof**

(71) Applicant: Siemens Aktiengesellschaft, 80333 München (DE)
(72) Inventor: Graichen, Andreas, 60214 Norrköping (SE)

(57) **Abstract**

The present invention explains explosion welding of the hot component parts (2) of a turbine or power plants. The arrangement includes a cladding material (1) deposited onto a surface (9) for welding associated with the hot gas component (2) and an explosion material (3) laid on top of said cladding material (1) and finally an ignition means (4) is used to ignite the explosion material, wherein a welding is made possible when an explosion is performed.

## Description

The present invention relates to an arrangement and a method for welding, particularly for welding a hot gas component of a turbine or power plants.

Today, welding of turbine parts, for examples turbine blades, blade tips is done with either arc-welding, e.g. tungsten inert gas (TIG) welding or beam welding methods, e.g. laser cladding. The process normally takes place under a protective gas shield and the filler material is added in the form of a massive rod or as powder. The process can even take place at an elevated temperature, in a so called hot box. Mostly one component at a time is built up. These methods can be expensive, slow, can have quality problems like pores or cracks and can affect the component's base material in a negative way by changing the metallurgical composition, particle sizes and distributions etc. Moreover, for CNC-processes like laser cladding, exact positional data must be available in order to create the welding path.

However, both methods add more or less large amount of heat into the component - with deformation and metallurgical structure changes as a consequence. The restoration and repair of such components like blade tips and other turbine parts suffer performance problems because of the degradation and the structural change that happen in the welded materials due to the traditional fusion welding.

It is an object of the present invention to provide improved quality of bonding of the hot component parts of a turbine when a welding process is performed.

The said object is achieved by an arrangement for welding hot gas component of a turbine comprising:
a cladding material deposited onto a surface for welding associated with the hot gas component;
an explosion material laid on top of said cladding material; and
an ignition means to ignite the explosion material for performing an explosion.

The said object is also achieved by a method of welding hot gas component of a turbine comprising:
providing a cladding material deposited onto a surface for welding associated with the hot gas component;
providing an explosive material, said explosion material laid on top of said cladding material; and
performing an explosion by igniting the explosion material.

The underlying idea is to perform explosion welding of the hot component parts of the turbine. As compared to the traditional welding methods which add more or less a large amount of heat into the component resulting in metallurgical structure changes as a consequence, the present invention proposed provides a stronger and fault free bonding without detrimental change in the basic structure of the welded materials, since the method does not involve any heat input over a critical threshold. This results ideally in increasing life expectancy for the welded parts. Even if, explosion welding as a technology was known; such an application was not described before. The hot gas component, for example could be part of a gas turbine which is exposed during operation to hot gas having very high temperature. The temperature of the hot gas can even go beyond 1000°C.

In a preferred embodiment, the cladding material can be layered. This enables welding of dissimilar materials. If the materials that need to be welded are of different compositions, the cladding materials can be chosen in such a way to have layers of materials suited for effective welding of those dissimilar material surfaces, which ideally results in strong bonding. This also applies when dissimilar cladding materials are cladded onto hot gas components.

In an alternative embodiment, the cladding material comprises an oxide dispersion strengthened (ODS) alloy. ODS alloys are highly oxidation resistant and do not deteriorate at high temperature as many other metallic alloys do. ODS alloys have high mechanical strength at elevated temperatures making them usable and stable at high temperatures.

In an alternative embodiment, the cladding material is a preformed part having a profile adapted for welding the hot gas component. Here the cladding material is preformed using any standard process to have a required size, shape and profile that suits the hot gas component part of the turbine. Making the cladding material as preformed parts helps in easier and effective welding process.

In an alternative embodiment, the preformed part is adapted to fit the surface for welding of a turbine blade. Providing a cladding material as a preformed part enables in building effective and accurate bonding regions.

In an alternative embodiment, the cladding material is a sheet of plate. This enables the welding of more or less flat surfaces, for example like heat shields.

In an alternative embodiment, the arrangement further comprises a gap between the cladding material and the hot gas component. The gap is necessary to achieve enough acceleration or kinetic energy for the cladding materials prior to the impact with the surface of the hot gas component that need to be welded.

The present invention is further described hereinafter with reference to illustrated embodiments shown in the accompanying drawings, in which:
FIG 1 illustrates a schematic diagram of the arrangement to an embodiment of the invention; and
FIG 2 illustrates a flow diagram of the method according to an embodiment of the invention.

The present invention relates to be very high temperature regions of power plants or turbine parts, more specifically, to repairing and welding of critical metal structures and components adapted to be operated at very high temperature regions.

Explosion welding is a solid state metal joining process that uses explosive force to create a metallurgical bond between two metal components. Although the explosive detonation generates considerable heat, there is no time for heat transfer to the component metals; therefore, there is no appreciable temperature increase in the metals.

General trends in power generation are to increase operating temperatures since the efficiency of any turbine scales as the temperature difference between the inlet and outlet temperatures of the working fluid driving the turbine increases. The upper temperature operating limits of a power plant are usually determined by the high temperature properties of the materials used in the construction of the high temperature region of the plant. The high temperature regions of the power plants will continually operate at temperatures exceeding 800°C. This is an upper limit for most structural alloys. Nickel and cobalt based super-alloys are required for this type of applications because they are to some extent resistant to high temperature corrosion. Ideal candidate for the use in direct contact with the hot gas flow are oxide dispersion strengthened (ODS) alloys. If there is a repair work of the turbine parts, generally traditional fusion welding techniques does not provide the expected bonding characteristics and material stability.

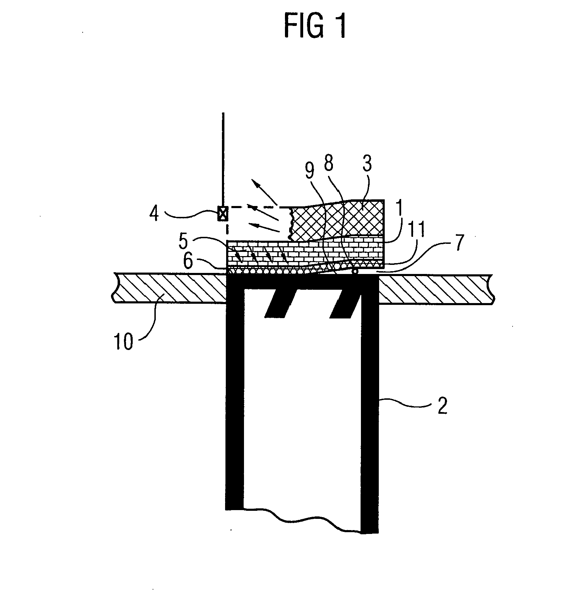

FIG 1 illustrates a schematic diagram of the arrangement of an embodiment of the invention. Here, a cladding material 1 is placed onto a prepared surface 9 of the hot gas component 2 with the help of an explosive material 3. Here, the cladding material 1 is a preformed part or a sheet of plate with uniform or non uniform thickness. The cladding material can even be in the form of powder or a paste. If necessary or desired, an intermediate material 11 with certain material properties can be added, e.g. in order to weld extremely dissimilar cladding materials and hot gas components.
The hot gas component could be a turbine blade component, guide vane, heat shield which needs to be built up. These components could be part of a steam turbine or a gas turbine. A gap 7 is generally provided between the cladding material and the surface for welding, which is controlled using a spacer 8. The height of the gap 7 is defined by spacers 8. The explosive material 3 is ignited with the help of an ignition device 4. Originating from the ignition point, a shock wave 5 is emitted that accelerates the cladding material onto the substrate, upon which a bonding 6 takes place. The bonding front moves quickly forward and expels any oxides, gases or foreign particles that might be trapped in the controlled gap 7 between the cladding material and the hot gas component. The gap can, if necessary, be flooded by an inert gas. The hot gas component, which needs to be welded and the whole arrangement are held in place for performing the welding process using a suitable fixture 10. In order to prevent unwanted build up on areas of the substrate, where no build up is wanted, the fixture 10 can itself act as a masking device. If needed separate devices for masking can be used while welding. Unwanted build up can also be avoided by using preformed cladding materials as per the required size and profile of the component surfaces that need to be welded.

Some of the basic faults, which are encountered while doing the traditional welding process like formation of cracks in the welded portion or formation of pores or deposition of impurities in the welded portion are not likely to occur while performing this type of explosion welding.

By performing this explosion welding or bonding the component metals remain in their wrought states and continuous cast structures are not created. The microstructures, mechanical properties and corrosion properties of the wrought parent components are not altered from applicable pre-bonding specification requirements. There are nearly no heat-affected zones. As there is no weld pool, chemical mixing in a molten weld pool is avoided.

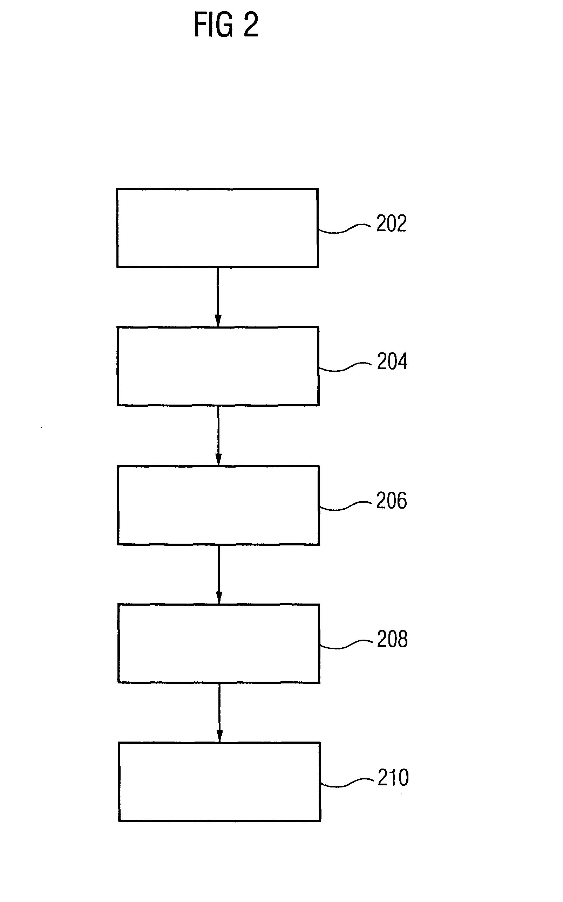

FIG 2 illustrates a flow diagram of the method according to an embodiment of the invention. At step 202, a cladding material is placed onto a surface for welding associated with the hot gas component. A gap is generally provided between the cladding material and the surface for welding, which is controlled using spacer. Then at step 204 an explosive material is provided on top of said cladding material. The hot gas component, which needs to be welded and the whole arrangement are held in place for performing the welding process using suitable fixtures. An explosion is then performed at step 206 which accelerates the cladding material onto the hot gas component, which is to be welded as shown in step 208. Finally the bonding is made possible at step 210. There is probability that along with the hot gas components the fixtures also get deposited with the cladding material because of the explosion. The hot gas component can then be removed safely by cutting itself off from the fixture using effective cutting mechanisms for example, water jet cutting. The advantage of choosing this cutting mechanism is that this does not introduce or impart any heat into the component or the welded portion. More over this is a cool process.

Summarizing, the embodiments explains explosion welding of the hot component parts of the turbine. The arrangement includes a cladding material placed onto a surface for welding associated with the hot gas component and an explosion material laid on top of said cladding material and finally an ignition means is used to ignite the explosion material, wherein a welding is made possible when an explosion is performed. This method of welding could be applied to component parts during repair or even during manufacturing of new components.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the scope of the present invention as defined.

## Claims

1. An arrangement for welding a hot gas component (2) of a turbine comprising:
- a cladding material (1) deposited onto a surface (9) for welding associated with the hot gas component (2);
- an explosion material (3) laid on top of said cladding material (1); and
- an ignition means (4) to ignite the explosion material (3) for performing an explosion.

2. The arrangement according to claim 1, wherein the cladding material (1) is layered.

3. The arrangement according to claim 1, wherein the cladding material (1) comprises an ODS alloy.

4. The arrangement according to claim 1, wherein the cladding material (1) is a preformed part having a profile adapted for welding the hot gas component (2).

5. The arrangement according to claim 4, wherein the preformed part is adapted to fit the surface (9) for welding of a turbine blade.

6. The arrangement according to claim 1, wherein the cladding material (1) is a sheet of plate.

7. The arrangement according to claim 1, wherein the arrangement further comprise a gap (7) between the cladding material (1) and the hot gas component (2).

8. A method of welding hot gas component (2) of a turbine comprising:
- providing a cladding material (1) deposited onto a surface (9) for welding associated with the hot gas component (2);
- providing an explosive material (3), said explosion material (3) laid on top of said cladding material (1); and
- performing an explosion by igniting the explosion material (3).

9. The method according to claim 8, further comprise the steps of accelerating the cladding material (1) onto the hot gas component (2) when an explosion is performed.

10. The method according to claim 8, wherein the cladding material (1) is layered.

11. The method according to claim 8, wherein the cladding material (1) comprises an ODS alloy.

12. The method according to claim 8, wherein the cladding material (1) is a preformed part having a profile adapted for welding the hot gas component (2).

13. The method according to claim 8, wherein the preformed part is adapted to fit the surface (9) for welding of a turbine blade.

14. The method according to claim 8, wherein the cladding material (1) is a sheet of plate.

15. The method according to claim 8, further comprise a gap (7) between the cladding material (1) and the hot gas component (2).
